# EUROPEAN PATENT SPECIFICATION

(11) **EP 4 213 375 B1**
(45) Date of publication and mention of the grant of the patent: **12.11.2025**
(21) Application number: 22724401.9
(22) Date of filing: 07.02.2022
(51) Int. Cl.: H02S 20/00, H02S 20/26, H02S 30/00, H02S 20/22

(54) **FACADE PHOTOVOLTAIC MODULE**
FASSADEN-PHOTOVOLTAIKMODUL
MODULE PHOTOVOLTAÏQUE DE FAÇADE

(30) Priority: 30.11.2021 CN 202111437805
(43) Date of publication of application: 19.07.2023
(73) Proprietor: Hengdian Group DMEGC Magnetics Co., Ltd., Jinhua, Zhejiang 322118 (CN)
(72) Inventor: LOU, Caoxin, Jinhua, Zhejiang 322118 (CN); GUO, Shuai, Jinhua, Zhejiang 322118 (CN); WU, Yuche, Jinhua, Zhejiang 322118 (CN)
(74) Representative: Ricker, Mathias
(86) International application number: PCT/CN2022/075330
(87) International publication number: WO 2023/097886

(56) References cited:
- CN-A- 113 653 273
- CN-U- 205 081 723
- CN-U- 208 522 687
- CN-U- 209 767 437
- US-A1- 2016 111 996
- US-A1- 2021 143 771

## Description

### TECHNICAL FIELD

This embodiment relates to the field of photovoltaic technology, for example, a facade photovoltaic module.

### BACKGROUND

With the continuous development of photovoltaic technology, the photovoltaic technology as the most potential power preparation technology and a building as a main body consuming power complement each other. Specifically, the photovoltaic technology produces power and the building needs power. The building-integrated photovoltaics (BIPV) combining the photovoltaic technology and the building is a necessary way for conserving energy, reducing emissions, and implementing carbon neutrality. Compared with the related art in which a large photovoltaic power station is used for supplying power to residents, the BIPV can greatly improve the energy utilization effect with the energy storage function of a photovoltaic module because a single photovoltaic module has a small size, the distance between the photovoltaic module and a place which needs power is short, and there is almost no power loss during transmission.

In the related art, the combination of the photovoltaic technology and the building is mainly embodied on a roof. Photovoltaic panels are laid on the roof so that the building can generate power. A relatively good power generation effect can be achieved in this combination manner. However, the roof has a very limited area, and especially for a high-rise building, the area of the roof accounts for a smaller proportion of the whole building surface area. The small area of the roof is taken into consideration. In addition, some protruding structures are also on the roof itself, which will provide shade, further reduce the light-receiving area of the photovoltaic panel, and reduce the power generation efficiency of the photovoltaic module.

The US 2016/111996 A1 discloses clamp assemblies for mounting solar panels and accessories. The clamp assemblies can have geometric features, shaped apertures for fasteners, and measured protrusions for allowing clamp rotation, lateral adjustment, self-alignment, and angled surfaces for facilitating installation of a solar panel.

### SUMMARY

The invention is set out by the appended set of claims. The present application provides a facade photovoltaic module. The facade photovoltaic module has a simple structure, can implement the stable connection between the photovoltaic module and a building, improves the stability and reliability of the photovoltaic module and the heat dissipation effect of the photovoltaic module, and prolongs a service life.

An embodiment provides a facade photovoltaic module including a photovoltaic panel, a fixing structure, and a reinforcement strip. The fixing structure includes a clamp, and a fixing base provided with a first engaging groove, where the photovoltaic panel is disposed between the clamp and the fixing base, and the photovoltaic panel is engaged with the first engaging groove. The reinforcement strip is provided with a second engaging groove, where the second engaging groove is engaged with the peripheral side of the photovoltaic panel, and at least part of the reinforcement strip is disposed between the clamp and the fixing base.

### BRIEF DESCRIPTION OF DRAWINGS

FIG. 1 is a structural view of a facade photovoltaic module according to an embodiment of the present application;
FIG. 2 is structural view one of a clamp according to an embodiment of the present application;
FIG. 3 is structural view two of a clamp according to an embodiment of the present application;
FIG. 4 is a structural view of a fixing base according to an embodiment of the present application;
FIG. 5 is an exploded view of a fixing base according to an embodiment of the present application;
FIG. 6 is a structural view of a connection plate according to an embodiment of the present application;
FIG. 7 is a top view of a column body according to an embodiment of the present application;
FIG. 8 is a structural view of a fixing base and a building facade wall according to an embodiment of the present application;
FIG. 9 is structural view one of a reinforcement gasket according to an embodiment of the present application;
FIG. 10 is structural view two of a reinforcement gasket according to an embodiment of the present application;
FIG. 11 is a structural view of a facade photovoltaic module and a ramp support structure according to an embodiment of the present application; and
FIG. 12 is a side view of a facade photovoltaic module and a ramp support structure according to an embodiment of the present application.

### Reference list

- 100: photovoltaic panel
- 200: fixing structure
- 300: reinforcement strip
- 400: first fixing member
- 500: building facade wall
- 600: ramp support structure
- 1: clamp
- 11: first mounting hole
- 12: first protrusion
- 13: second protrusion
- 14: recess
- 2: fixing base
- 21: connection plate
- 211: first engaging groove
- 212: first through hole
- 213: first stopper slot
- 22: column
- 221: engaging member
- 2211: second mounting hole
- 2212: third protrusion
- 2213: first through groove
- 222: column body
- 2221: support member
- 2222: second through groove
- 2223: second stopper slot
- 2224: stopper member
- 2225: inner hole
- 23: reinforcement gasket
- 24: second fixing member

### DETAILED DESCRIPTION

In the description of the present application, unless otherwise expressly specified and limited, the term "connected to each other", "connected", or "fixing" is to be construed in a broad sense, for example, as fixedly connected, detachably connected, or integrated; mechanically connected or electrically connected; directly connected to each other or indirectly connected to each other via an intermediary; or internally connected or an interactional relationship between two elements. For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of the embodiment, the orientations or position relations indicated by terms such as "on", "below", "left", "right", and the like are based on orientations or position relations shown in the drawings. These orientations or position relations are intended only to facilitate and simplify description of the present application, and not to indicate or imply that a device or element referred to must have such specific orientations or must be configured or operated in such specific orientations. Therefore, these orientations or position relations are not to be construed as limiting the present application. In addition, the terms "first" and "second" are used merely to distinguish between descriptions and have no special meaning.

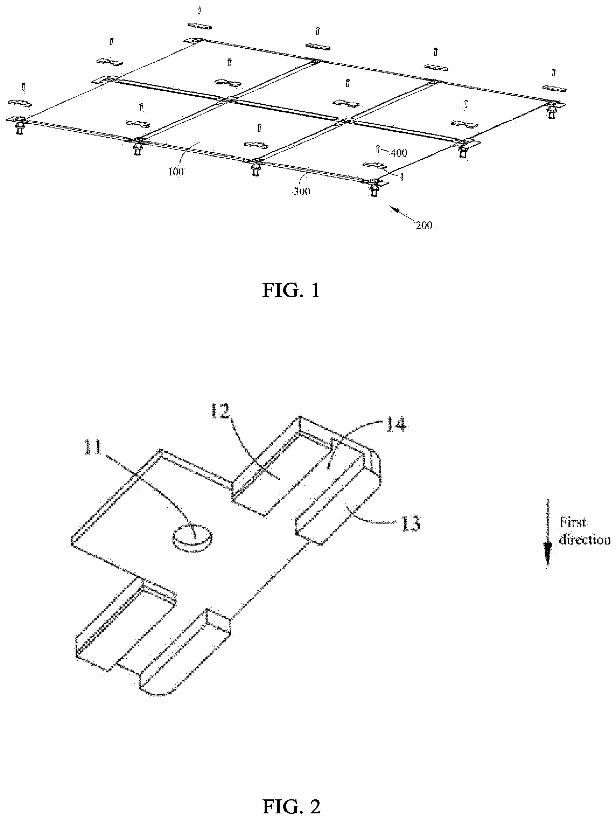

As shown in FIGS. 1 to 6, a facade photovoltaic module is provided in this embodiment, and mainly includes a photovoltaic panel 100, a fixing structure 200, and a reinforcement strip 300. The fixing structure 200 includes a clamp 1, and a fixing base 2 provided with a first engaging groove 211. The photovoltaic panel 100 is disposed between the clamp 1 and the fixing base 2, and the photovoltaic panel 100 is engaged with the first engaging groove 211. The reinforcement strip 300 is provided with a second engaging groove (not shown in the figure) engaged with the peripheral side of the photovoltaic panel 100, and at least part of the reinforcement strip 300 is disposed between the clamp 1 and the fixing base 2.

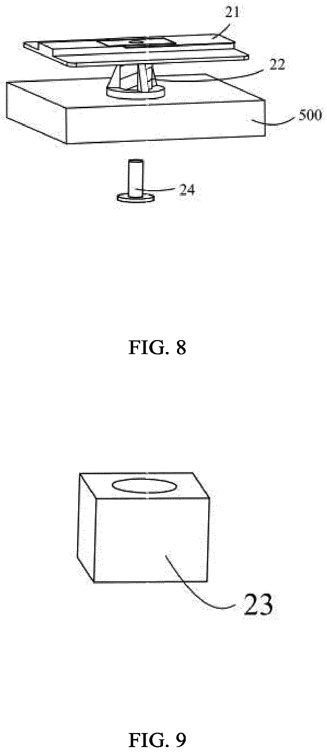

The photovoltaic panel 100 in this embodiment may be made of double-layer glass (a double-glass module), single-layer glass (a single-glass module), and a non-glass material. The reinforcement strip 300 is disposed on the peripheral side of the photovoltaic panel 100. On the one hand, the reinforcement strip 300 can protect the photovoltaic panel 100 to a certain extent and improve the mechanical strength of the side of the photovoltaic panel 100. On the other hand, the reinforcement strip 300 can also have a certain beautifying effect and make the appearance of the photovoltaic module more beautiful. The second engaging groove can improve the stability of the connection between the photovoltaic panel 100 and the reinforcement strip 300. The first engaging groove 211 can limit the photovoltaic panel 100 to a certain extent. In this case, the stability and reliability of the photovoltaic panel 100 can be further improved through the cooperation between the first engaging groove 211 and the second engaging groove, thereby avoiding the displacement or vibration of the photovoltaic panel 100 during normal operation. As shown in FIG. 8, one end of the fixing structure 200 facing away from the photovoltaic panel 100 is connected to a building facade wall 500 so that the effect that the photovoltaic panel 100 is mounted on the building facade wall 500 is implemented. In addition, the fixing structure 200 has a preset height so that the photovoltaic panel 100 can maintain a preset distance from the building facade wall 500, thereby facilitating the heat dissipation and ventilation on the back of the photovoltaic module, avoiding heat concentration, improving the heat dissipation effect, and prolonging the service life of the photovoltaic module. The facade photovoltaic module can use a smaller area of a building roof. The facade photovoltaic module is disposed on the building facade wall to increase a light receiving area of the facade photovoltaic module, improve the power generation efficiency, and save the cost.

With continued reference to FIG. 1, in an embodiment, the facade photovoltaic module includes a first fixing member 400, where a first mounting hole 11 is disposed in the clamp 1, a second mounting hole 2211 is disposed in the fixing base 2, and the first fixing member 400 passes through the first mounting hole 11 and is connected to the second mounting hole 2211. In this embodiment, the first fixing member 400 may be a component such as a screw, a bolt, or a rivet. The first fixing member 400 can improve the effect of the secure connection between the clamp 1 and the fixing base 2. In addition, the first fixing member 400 can also indirectly press the clamp 1 against the reinforcement strip 300 because the reinforcement strip 300 is partially clamped between the clamp 1 and the fixing base 2, thereby further improving the stability and reliability of the photovoltaic module. Apparently, a user may also select other fastener connection forms according to actual requirements. For example, connection forms such as connections through the engagement or buckling of fasteners all fall within the scope of this embodiment, and details are not described herein.

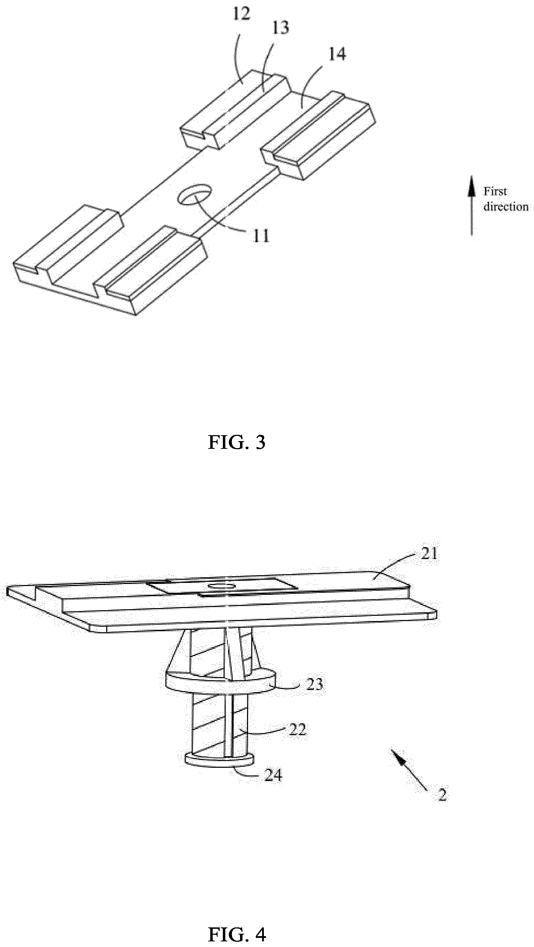

As shown in FIGS. 2 and 3, in this embodiment, the clamp 1 includes a first protrusion 12 and a second protrusion 13. The first protrusion 12 and the second protrusion 13 are integrally formed, thereby improving the mechanical strength of the clamp 1. In addition, the first protrusion 12 and the second protrusion 13 are disposed on the side of the clamp 1 facing the photovoltaic panel 100. Along a first direction, the first protrusion 12 has a height less than the height of the second protrusion 13. The first protrusion 12 is configured to press the photovoltaic panel 100. The second protrusion 13 is configured to press the fixing base 2. Through the cooperation between the first protrusion 12 and the second protrusion 13, the pressing effect of the clamp 1 against the photovoltaic panel 100 and the fixing base 2 can be further improved.

With continued reference to FIGS. 2 and 3, in this embodiment, the clamp 1 further includes a recess 14; and along the first direction, the recess 14 has a height less than the height of the first protrusion 12 and is configured to press the reinforcement strip 300. In this case, the clamp 1 can be tightly connected to the photovoltaic panel 100, the fixing base 2, and the reinforcement strip 300 at the same time, thereby improving the stability and reliability of the photovoltaic module. In this embodiment, an adhesive strip is disposed on the side of the clamp 1 facing the photovoltaic panel 100 so that the rigidity of the connections of the clamp 1 to the photovoltaic panel 100, the fixing base 2, and the reinforcement strip 300 is reduced so as to protect the photovoltaic module.

With continued reference to FIGS. 2 and 3, the user can select clamps 1 of different shapes according to the actual requirements. For example, the area of the recess 14 on the clamp 1 may be increased so that the pressing area between the clamp 1 and the reinforcement strip 300 can be increased, thus helping improve the stability of the connection between the clamp 1 and the photovoltaic panel 100.

In this embodiment, as shown in FIGS. 4 to 6, the fixing base 2 includes a connection plate 21 and a column 22. The connection plate 21 is detachably connected to the column 22, thereby facilitating the replacement and maintenance of the photovoltaic panel 100 in a later stage. The column 22 includes an engaging member 221 and a column body 222. A first through hole 212 is disposed in the connection plate 21, and the engaging member 221 is capable of passing through the first through hole 212 and is connected to the column body 222. In this embodiment, the end of the engaging member 221 facing the column 22 has a hollow structure. The area of an axial cross section of the engaging member 221 is larger than the area of an axial cross section of the column 22 so that the engaging member 221 is conveniently sleeved on the column 22.

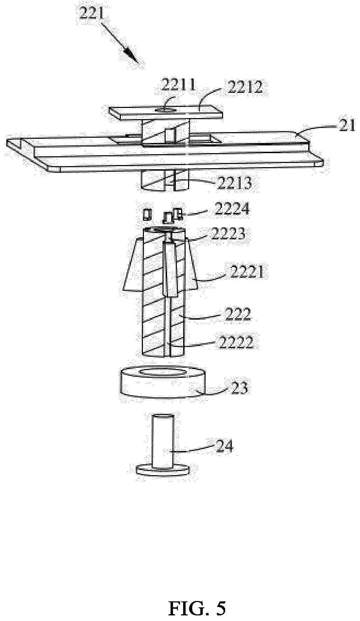

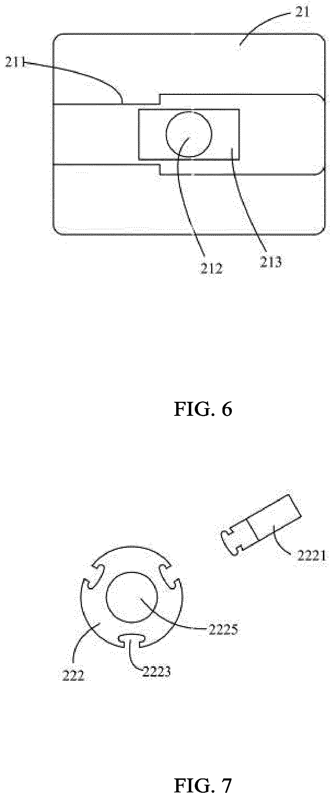

In an embodiment, as shown in FIGS. 5 and 6, a first stopper slot 213 is disposed on the connection plate 21. The engaging member 221 is provided with a third protrusion 2212, and the third protrusion 2212 is engaged with the first stopper slot 213. Thus, the third protrusion 2212 can limit the connection plate 21 to a certain extent and prevents the connection plate 21 from rotating during use. Apparently, according to the actual requirements, the user may configure the first stopper slot 213 to have different shapes such as a square, a triangle, or an irregular polygon, all of which fall within the scope of this embodiment, and details are not described herein.

As shown in FIGS. 4, 5, and 7, in this embodiment, the column 22 includes support members 2221, first through grooves 2213are disposed on the engaging member 221, second through grooves 2222 are disposed on the column 22, a support member 2221 is partially clamped in a second through groove 2222, and a first through groove 2213 is engaged with the support member 2221. The column 22 is configured to have a hollow structure, that is, the column body 222 of the column 22 is provided with an inner hole 2225. The first through grooves 2213 and the second through grooves 2222 are disposed to be in one-to-one correspondence. **In** this case, when the engaging member 221 is sleeved on the column 22, the first through grooves 2213 on the engaging member 221 can be engaged with the support members 2221 correspondingly, thereby improving the accuracy of assembling the engaging member 221 with the column 22. The provided support members 2221 are conducive to improving the mechanical strength of the column 22, thereby improving the reliability and stability of the column 22 supporting the photovoltaic panel 100. It is to be noted that the support members 2221 are disposed to be in one-to-one correspondence with the second through grooves 2222. The user may increase or decrease the number of the support members 2221 and the number of the second through grooves 2222 according to the actual requirements. The support members 2221 may be configured to have a square shape, a triangle shape, or the like.

As shown in FIGS. 5 and 7, in this embodiment, the column 22 further includes second stopper slots 2223 and stopper members 2224. The stopper members 2224 are embedded in the second stopper slots 2223. The stopper members 2224 are disposed to be in one-to-one correspondence with the stopper slots and the second through grooves 2222. The second stopper slots 2223 are disposed at the ends of the second through grooves 2222 facing the connection plate 21. The stopper members 2224 are conducive to limiting the support members 2221 to a certain extent and prevent the support members 2221 from moving toward the connection plate 21, thereby improving the stability and reliability of the support members 2221.

As shown in FIGS. 5, 7, and 8, in this embodiment, the column 22 further includes a reinforcement gasket 23 and a second fixing member 24. The reinforcement gasket 23 is sleeved on the column body 222 and abuts against the support members 2221. The second fixing member 24 is connected to the column body 222. In an embodiment, the column body 222 is provided with an external thread, and the reinforcement gasket 23 is also provided with an internal thread matching the external thread so that the stability and reliability of the connection between the reinforcement gasket 23 and the column body 222 can be improved. Holes are formed in the building facade wall 500, and the column body 222 of the column 22 can be partially inserted into a hole. Since the column body 222 of the column 22 is configured to have the hollow structure, that is, the column body 222 is provided with the inner hole 2225, the second fixing member 24 is fixedly connected to the inner hole 2225 of the column body 222 so that the building facade wall 500 can be stably connected between the second fixing member 24 and the reinforcement gasket 23, thereby improving the reliability and stability of the photovoltaic module. In this embodiment, the inner hole 2225 of the column body 222 may be provided with an internal thread, and a bolt having an external thread is used as the second fixing member 24, thereby implementing the detachable connection between the inner hole 2225 of the column body 222 and the second fixing member 24.

As shown in FIGS. 8 to 10, in an embodiment, the user can select reinforcement gaskets 23 and second fixing members 24 of different structures and shapes according to the actual requirements. The reinforcement gasket 23 is used as an example for description here. The structure of the reinforcement gasket 23 may be adjusted to be circular inside and square outside. Further, the reinforcement gasket 23 may have more connection manners (for example, a hollow column having a larger outer circle diameter) extending on the side. Holes are formed in the reinforcement gasket 23 for fixing. The reinforcement gasket 23 has two different inner diameters, the part having a larger diameter is connected to the engaging member 221, and the part having a smaller diameter is engaged with the column body 222 of the column 22. The second fixing member 24 may also be configured to have different shapes and structures so as to increase a connection manner and optimize a connection effect. The reinforcement gaskets 23 and the second fixing members 24 of the different structures and shapes are within the scope of this embodiment and details are not described herein again.

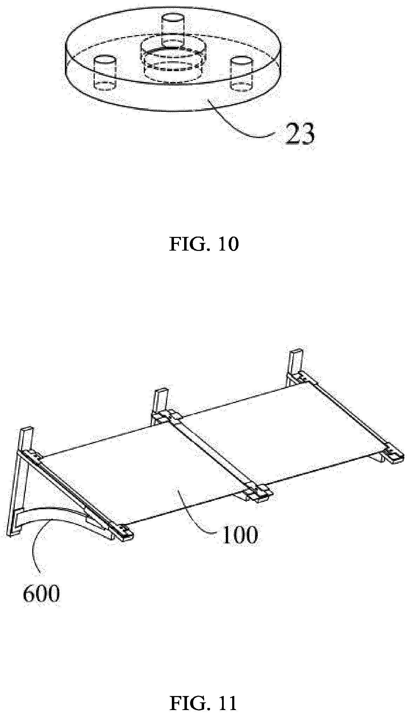

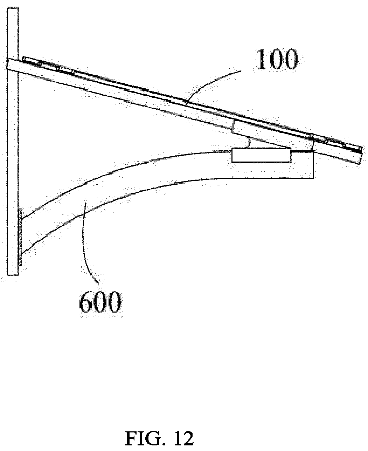

As shown in FIGS. 11 and 12, in this embodiment, the user may enable the facade photovoltaic module to have a preset inclination angle by adding an additional ramp support structure 600, thereby facilitating the mounting of a structure similar to a sunshade and rainproof device on the facade photovoltaic module. Thus, the flexibility of the facade photovoltaic module is improved and the service life of the facade photovoltaic module is prolonged.

The process of mounting the facade photovoltaic module includes steps described below.

In S1, the fixing base 2 is assembled. The user mounts the stopper members 2224 in the second stopper slots 2223 and then makes the engaging member 221 pass through the first through hole 212 in the connection plate 21 so that the first through grooves 2213 on the engaging member 221 can be matched with the second through grooves 2222 on the column 22 and then the first through grooves 2213 can be engaged with the support members 2221.

In S2, the fixing base 2 is connected to the building facade wall 500. The reinforcement gasket 23 is sleeved on the column body 222 of the column 22. The end of the column body 222 of the column 22 facing away from the connection plate 21 is inserted into a hole in the building facade wall 500 and the second fixing member 24 is enabled to pass through the hole in the building facade wall 500. The second fixing member 24 is connected to the inner hole 2225 in the column body 222 of the column 22, thereby implementing the stable connection between the fixing base 2 and the building facade wall 500. Apparently, the preceding steps S1 and S2 can be completed by a supplier before delivery, thereby reducing operation steps for the user and further improving the mounting efficiency of the facade photovoltaic module.

In S3, the reinforcement strip 300 and the photovoltaic panel 100 are mounted. The adhesive strip is sleeved around the photovoltaic panel 100. The reinforcement strip 300 is engaged with sides of the photovoltaic panel 100. In addition, the clamp 1 is mounted on the connection plate 21 of the fixing base 2 so that the first protrusion 12 of the clamp 1 can press the photovoltaic panel 100, the second protrusion 13 can press the fixing base 2, and the recess 14 can press the reinforcement strip 300. Then, the first fixing member 400 is enabled to pass through the first mounting hole 11 and is connected to the second mounting hole 2211, improving the pressing effect of the clamp 1 and the fixing base 2.

Apparently, the facade photovoltaic module in this embodiment is also convenient to be detached. When the user needs to detach the photovoltaic panel 100 for replacement or maintenance, the user only needs to release the connection between the first fixing member 400 and the clamp 1 and then release the connection between the reinforcement strip 300 and the photovoltaic panel 100. The detachment is convenient, thereby improving the working efficiency of the user.

## Claims

1. A facade photovoltaic module, comprising:
a photovoltaic panel (100); and
a fixing structure (200) comprising a clamp (1), and a fixing base (2) provided with a first engaging groove (211), wherein the photovoltaic panel (100) is disposed between the clamp (1) and the fixing base (2), and the photovoltaic panel (100) is engaged with the first engaging groove (211); **characterized by**
a reinforcement strip (300) provided with a second engaging groove, wherein the second engaging groove is engaged with a peripheral side of the photovoltaic panel (100), and at least part of the reinforcement strip (300) is disposed between the clamp (1) and the fixing base (2).

2. The facade photovoltaic module according to claim 1, comprising a first fixing member (400), wherein a first mounting hole (11) is disposed in the clamp (1), a second mounting hole (2211) is disposed in the fixing base (2), and the first fixing member (400) passes through the first mounting hole (11) and is connected to the second mounting hole (2211).

3. The facade photovoltaic module according to claim 1, wherein the clamp (1) comprises a first protrusion (12) and a second protrusion (13), and the first protrusion (12) and the second protrusion (13) are integrally formed and disposed on a side of the clamp (1) facing the photovoltaic panel (100); and
the first protrusion (12) has a height less than a height of the second protrusion (13) along a first direction, the first protrusion (12) is configured to press the photovoltaic panel (100), and the second protrusion (13) is configured to press the fixing base (2).

4. The facade photovoltaic module according to claim 3, wherein the clamp (1) further comprises a recess (14), and the recess (14) has a height less than the height of the first protrusion (12) along the first direction and is configured to press the reinforcement strip (300).

5. The facade photovoltaic module according to claim 1, wherein the fixing base (2) comprises a connection plate (21) and a column (22), the connection plate (21) is detachably connected to the column (22), and the first engaging groove (211) is disposed on the connection plate (21).

6. The facade photovoltaic module according to claim 5, wherein the column (22) comprises an engaging member (221) and a column body (222), a first through hole (212) is disposed in the connection plate (21), and the engaging member (221) is capable of passing through the first through hole (212) and is connected to the column body (222).

7. The facade photovoltaic module according to claim 6, wherein a first stopper slot (213) is disposed on the connection plate (21), the engaging member (221) is provided with a third protrusion (2212), and the third protrusion (2212) is engaged with the first stopper slot (213).

8. The facade photovoltaic module according to claim 6, wherein the column (22) comprises a support member (2221), a first through groove (2213) is disposed on the engaging member (221), a second through groove (2222) is disposed on the column (22), the support member (2221) is partially clamped in the second through groove (2222), and the first through groove (2213) is engaged with the support member (2221).

9. The facade photovoltaic module according to claim 8, wherein the column (22) further comprises a second stopper slot (2223) and a stopper member (2224), the second stopper slot (2223) is disposed at an end of the second through groove (2222) facing the connection plate (21), and the stopper member (2224) is embedded in the second stopper groove (2223).

10. The facade photovoltaic module according to claim 8, wherein the column (22) further comprises a reinforcement gasket (23) and a second fixing member (24), the reinforcement gasket (23) is sleeved on the column body (222) and abuts against the support member (2221), and the second fixing member (24) is connected to the column body (222).

## Patentansprüche

1. Fassaden-Photovoltaikmodul, umfassend:
ein Photovoltaikpaneel (100) und
eine Befestigungsstruktur (200), umfassend eine Klammer (1) und einen Befestigungssockel (2), der mit einer ersten Eingriffsnut (211) versehen ist, wobei das Photovoltaikpaneel (100) zwischen der Klammer (1) und dem Befestigungssockel (2) angeordnet ist und das Photovoltaikpaneel (100) mit der ersten Eingriffsnut (211) im Eingriff ist, **gekennzeichnet durch**
einen Verstärkungsstreifen (300), der mit einer zweiten Eingriffsnut versehen ist, wobei die zweite Eingriffsnut mit einer Umfangsseite des Photovoltaikpaneels (100) im Eingriff ist und mindestens ein Teil des Verstärkungsstreifens (300) zwischen der Klammer (1) und dem Befestigungssockel (2) angeordnet ist.

2. Fassaden-Photovoltaikmodul nach Anspruch 1, umfassend ein erstes Befestigungselement (400), wobei ein erstes Montageloch (11) in der Klammer (1) angeordnet ist, ein zweites Montageloch (2211) in dem Befestigungssockel (2) angeordnet ist und das erste Befestigungselement (400) durch das erste Montageloch (11) führt und mit dem zweiten Montageloch (2211) verbunden ist.

3. Fassaden-Photovoltaikmodul nach Anspruch 1, wobei die Klammer (1) einen ersten Vorsprung (12) und einen zweiten Vorsprung (13) umfasst und der erste Vorsprung (12) und der zweite Vorsprung (13) in einem Stück ausgebildet und auf einer Seite der Klammer (1) dem Photovoltaikpaneel (100) zugewandt angeordnet sind und
der erste Vorsprung (12) eine Höhe aufweist, die kleiner ist als eine Höhe des zweiten Vorsprungs (13) entlang einer ersten Richtung, der erste Vorsprung (12) ausgelegt ist, um das Photovoltaikpaneel (100) zu drücken, und der zweite Vorsprung (13) ausgelegt ist, um den Befestigungssockel (2) zu drücken.

4. Fassaden-Photovoltaikmodul nach Anspruch 3, wobei die Klammer (1) ferner eine Aussparung (14) umfasst und die Aussparung (14) eine Höhe aufweist, die kleiner ist als die Höhe des ersten Vorsprungs (12) entlang der ersten Richtung, und ausgelegt ist, um den Verstärkungsstreifen (300) zu drücken.

5. Fassaden-Photovoltaikmodul nach Anspruch 1, wobei der Befestigungssockel (2) eine Verbindungsplatte (21) und eine Säule (22) umfasst, die Verbindungsplatte (21) abnehmbar mit der Säule (22) verbunden ist und die erste Eingriffsnut (211) auf der Verbindungsplatte (21) angeordnet ist.

6. Fassaden-Photovoltaikmodul nach Anspruch 5, wobei die Säule (22) ein Eingriffselement (221) und einen Säulenkörper (222) umfasst, ein erstes Durchgangsloch (212) in der Verbindungsplatte (21) angeordnet ist und das Eingriffselement (221) fähig ist, durch das erste Durchgangsloch (212) zu führen, und mit dem Säulenkörper (222) verbunden ist.

7. Fassaden-Photovoltaikmodul nach Anspruch 6, wobei ein erster Stopperschlitz (213) auf der Verbindungsplatte (21) angeordnet ist, das Eingriffselement (221) mit einem dritten Vorsprung (2212) versehen ist und der dritte Vorsprung (2212) mit dem ersten Stopperschlitz (213) im Eingriff ist.

8. Fassaden-Photovoltaikmodul nach Anspruch 6, wobei die Säule (22) ein Stützelement (2221) umfasst, eine erste Durchgangsnut (2213) auf dem Eingriffselement (221) angeordnet ist, eine zweite Durchgangsnut (2222) auf der Säule (22) angeordnet ist, das Stützelement (2221) teilweise in der zweiten Durchgangsnut (2222) geklemmt ist und die erste Durchgangsnut (2213) mit dem Stützelement (2221) im Eingriff ist.

9. Fassaden-Photovoltaikmodul nach Anspruch 8, wobei die Säule (22) ferner einen zweiten Stopperschlitz (2223) und ein Stopperelement (2224) umfasst, der zweite Stopperschlitz (2223) an einem Ende der zweiten Durchgangsnut (2222) der Verbindungsplatte (21) zugewandt angeordnet ist und das Stopperelement (2224) in den zweiten Stopperschlitz (2223) eingebettet ist.

10. Fassaden-Photovoltaikmodul nach Anspruch 8, wobei die Säule (22) ferner eine Verstärkungsdichtung (23) und ein zweites Befestigungselement (24) umfasst, die Verstärkungsdichtung (23) auf den Säulenkörper (222) aufgeschoben ist und an dem Stützelement (2221) anschlägt und das zweite Befestigungselement (24) mit dem Säulenkörper (222) verbunden ist.

## Revendications

1. Module photovoltaïque de façade, comprenant :
un panneau photovoltaïque (100) ; et
une structure de fixation (200) comprenant une pince (1), et une base de fixation (2) pourvue d'une première rainure de mise en prise (211), dans lequel le panneau photovoltaïque (100) est disposé entre la pince (1) et la base de fixation (2), et le panneau photovoltaïque (100) est en prise avec la première rainure de mise en prise (211) ; **caractérisé en ce que**
une bande de renfort (300) pourvue d'une deuxième rainure de mise en prise, dans lequel la deuxième rainure de mise en prise est en prise avec un côté périphérique du panneau photovoltaïque (100), et au moins une partie de la bande de renfort (300) est disposée entre la pince (1) et la base de fixation (2).

2. Module photovoltaïque de façade selon la revendication 1, comprenant un premier organe de fixation (400), dans lequel un premier trou de montage (11) est disposé dans la pince (1), un deuxième trou de montage (2211) est disposé dans la base de fixation (2), et le premier organe de fixation (400) passe à travers le premier trou de montage (11) et est relié au deuxième trou de montage (2211).

3. Module photovoltaïque de façade selon la revendication 1, dans lequel la pince (1) comprend une première saillie (12) et une deuxième saillie (13), et la première saillie (12) et la deuxième saillie (13) sont formées d'un seul tenant et disposées sur un côté de la pince (1) en regard du panneau photovoltaïque (100) ; et
la première saillie (12) présente une hauteur inférieure à une hauteur de la deuxième saillie (13) le long d'une première direction, la première saillie (12) est configurée pour presser le panneau photovoltaïque (100), et la deuxième saillie (13) est configurée pour presser la base de fixation (2).

4. Module photovoltaïque de façade selon la revendication 3, dans lequel la pince (1) comprend en outre un évidement (14), et l'évidement (14) présente une hauteur inférieure à la hauteur de la première saillie (12) le long de la première direction et est configuré pour presser la bande de renfort (300).

5. Module photovoltaïque de façade selon la revendication 1, dans lequel la base de fixation (2) comprend une plaque de connexion (21) et une colonne (22), la plaque de connexion (21) est connectée de manière détachable à la colonne (22), et la première rainure de mise en prise (211) est disposée sur la plaque de connexion (21).

6. Module photovoltaïque de façade selon la revendication 5, dans lequel la colonne (22) comprend un organe de mise en prise (221) et un corps de colonne (222), un premier trou traversant (212) est disposé dans la plaque de connexion (21), et l'organe de mise en prise (221) est capable de passer à travers le premier trou traversant (212) et est relié au corps de colonne (222).

7. Module photovoltaïque de façade selon la revendication 6, dans lequel une première fente de butée (213) est disposée sur la plaque de connexion (21), l'organe de mise en prise (221) est pourvu d'une troisième saillie (2212), et la troisième saillie (2212) est en prise avec la première fente de butée (213).

8. Module photovoltaïque de façade selon la revendication 6, dans lequel la colonne (22) comprend un organe de support (2221), une première rainure traversante (2213) est disposée sur l'organe de mise en prise (221), une deuxième rainure traversante (2222) est disposée sur la colonne (22), l'organe de support (2221) est partiellement serré dans la deuxième rainure traversante (2222), et la première rainure traversante (2213) est en prise avec l'organe de support (2221).

9. Module photovoltaïque de façade selon la revendication 8, dans lequel la colonne (22) comprend en outre une deuxième fente de butée (2223) et un organe de butée (2224), la deuxième fente de butée (2223) est disposée au niveau d'une extrémité de la deuxième rainure traversante (2222) en regard de la plaque de connexion (21), et l'organe de butée (2224) est incorporé dans la deuxième fente de butée (2223).

10. Module photovoltaïque de façade selon la revendication 8, dans lequel la colonne (22) comprend en outre un joint de renfort (23) et un deuxième organe de fixation (24), le joint de renfort (23) est emmanché sur le corps de colonne (222) et vient en butée contre l'organe de support (2221), et le deuxième organe de fixation (24) est relié au corps de colonne (222).
